# EUROPEAN PATENT APPLICATION

(11) **EP 4 163 230 A1**
(43) Date of publication of application: **12.04.2023**
(21) Application number: 21817693.1
(22) Date of filing: 25.05.2021
(51) Int. Cl.: B65G 1/04, B65G 1/137, B65G 47/90, B65G 43/08

(54) **GOODS BOX CARRYING ROBOT AND METHOD FOR USING SAME**

(30) Priority: 05.06.2020 CN 202010507410
(71) Applicant: Beijing Geekplus Technology Co., Ltd., Beijing 100102 (CN)
(72) Inventor: LI, Xiaowei, Beijing 100102 (CN); XIAO, Yuhui, Beijing 100102 (CN); WANG, Pengfei, Beijing 100102 (CN); WANG, Kun, Beijing 100102 (CN); SONG, Wei, Beijing 100102 (CN)
(74) Representative: Manna, Sara
(86) International application number: PCT/CN2021/095846
(87) International publication number: WO 2021/244355

(57) **Abstract**

A goods box carrying robot and a method for using same. The robot comprises: a robot carrier (10) and a portal frame (20) disposed on the robot carrier (10). The robot further comprises a goods pickup mechanism (40); the goods pickup mechanism (40) comprises: a body (40c) slidably connected to the portal frame (20), and a pair of holding forks (40a, 40b) slidably connected to the body (40c). Each of the holding forks (40a, 40b) comprises an intermediate assembly slidably connected to the body (40c), and a tail arm (420) slidably connected to the intermediate assembly and used for pulling a goods box. The intermediate assembly comprises multiple detachable independent arms (410, 430, 440), and the multiple independent arms (410, 430, 440) are relatively slidable. The body (40c) is provided with a driving mechanism used for driving each of the holding forks (40a, 40b). Each of the independent arms (410, 430, 440) is provided with a linkage mechanism linked with the driving mechanism. According to the goods box carrying robot, the extension and retraction length of the holding forks can be adjusted, thus improving the adaptability of the goods box carrying robot.

## Description

This application claims priority to the Chinese Patent Application No. 202010507410.0 with a title of "GOODS CONTAINER TRANSFER ROBOT AND METHOD USING SAME" filed on June 05, 2020, the entire content of which is incorporated herein by reference.

### TECHNICAL FIELD

The present disclosure relates to a field of logistics, and more particularly, to a goods container transfer robot and a method using the same.

### BACKGROUND

In a transferring process by a robot in the existing logistics field, an original Automated Guided Vehicle (AGV) robot is a device configured to transfer a goods shelf. With the progress of technology, most factories now begin to use the AGV robot as a transfer device for transferring goods storage such as a goods container or a carton. A telescopic fork in the existing AGV robot, which is configured to pick up the goods container and the carton, mostly has a lst-stage mode for fixing and a 2nd-stage mode for extending and retracting. However, with the change of the layout of goods shelves, the transferring device in the related art can only get the goods container located at a fixed depth, which can no longer meet the requirements of transferring. In the face of the demand for and the application scenario of further increase of a storage density, the existing telescopic fork robot with a single extending position presents certain disadvantages in the face of high-density storage scenarios of a plurality of rows of good shelves.

### SUMMARY

The objective of the present disclosure is to overcome the shortcomings of the related art and to provide a goods container transfer robot and a method using the same.

The present disclosure is realized through the following technical solutions.

The present disclosure provides a goods container transfer robot. The robot includes a robot carrier and a gantry arranged on the robot carrier, and further includes a picking mechanism. The picking mechanism includes a body slidably connected to the gantry and a pair of clamping forks slidably connected to the body, and each clamping fork includes an intermediate assembly slidably connected to the body and a distal arm slidably connected to the intermediate assembly and configured to pull a goods container. The distal arm includes a pulling finger mechanism configured to pull the goods container. The intermediate assembly includes a plurality of detachable independent arms, the plurality of independent arms are configured to slide relative to each other, the body includes a driving mechanism configured to drive each clamping fork, and each independent arm includes a linkage mechanism linked with the driving mechanism. In the above technical solution, by designing the intermediate mechanism into a modular structure, a telescopic length of the clamping fork can be adjusted according to a depth of the goods shelf in which the goods container that actually needs to be transferred is located, thus improving the adaptability of the goods container transfer robot.

In a specific implementation, the clamping fork is a bi-directional clamping fork, thus allowing to pick up the goods container in two directions and improving the adaptability of the goods container transfer robot.

In a specific implementation, the linkage mechanism of each independent arm includes a synchronous belt arranged on the independent arm. An end of the synchronous belt located on one side of the independent arm is fixedly connected to an adjacent independent arm or the body in a detachable manner, and an end of the synchronous belt located on the other side of the independent arm is fixedly connected to another adjacent independent arm or the distal arm in a detachable manner. Linkage is realized through the synchronous belt, which facilitates adjustment of a length of the clamping fork.

In a specific implementation, two synchronous belts are provided when the clamping fork is a bi-directional clamping fork, one of the synchronous belts is configured to drive the independent arm to extend and retract in a first direction, the other one of the synchronous belts is configured to drive the independent arm to extend and retract in a second direction, and the first direction is opposite to the second direction, thus realizing the extension and retraction in two directions.

In a specific implementation, the goods container transfer robot further includes a lifting mechanism configured to drive the body to slide. The lifting mechanism drives the picking mechanism to move.

In a specific implementation, the lifting mechanism includes a gear and rack mechanism, a synchronous belt mechanism, a lead screw mechanism or a friction wheel mechanism. Different lifting mechanisms may realize the driving of the picking mechanism.

In a specific implementation, the distal arm includes a pulling finger mechanism configured to pull the goods container. The pulling finger mechanism realizes the transferring of the goods container.

In a specific implementation, each pulling finger mechanism includes a steering machine fixed on the distal arm and a pulling finger connected to the steering machine, and the steering machine is configured to drive the pulling finger to rotate. The steering machine drives the pulling finger, thus reducing the space occupied by the pulling finger mechanism and also ensuring the reliability of the pulling finger mechanism.

In a specific implementation, each distal arm includes a plurality of pulling finger mechanisms, and the plurality of pulling finger mechanisms extend in a length direction of the distal arm. The plurality of pulling finger mechanisms are configured to move independently, so as to limit different goods containers. The plurality of pulling finger mechanisms may realize the transferring of a single goods container or a plurality of goods containers.

In a specific implementation, the goods container transfer robot further includes: a sensor arranged on the distal arm and configured to detect the goods container; and a control device configured to control the pulling fingers of the pulling finger mechanisms located on two sides of the goods container to rotate to a working position when the sensor detects the goods container to be transported, thus improving the accuracy when pulling the goods container.

In a specific implementation, the driving mechanism includes a driving unit configured to provide a driving force, a double-side toothed synchronous belt connected to the driving unit and a rack engaged with the double-side toothed synchronous belt. The rack is fixedly connected to the independent arm adjacent to the body in a detachable manner. The fit of the rack and the double-side toothed synchronous belt facilitates the driving of the clamping fork.

In a specific implementation, each distal arm has two pulling finger mechanisms, and the two pulling finger mechanisms are arranged at two opposite ends of the distal arm, respectively, so that it is convenient to pull the goods container in two directions.

The present disclosure further provides a method for transferring a goods container. The method uses the goods container transfer robot described in any one of the above embodiments, and includes: determining a number of independent arms according to a depth of a goods shelf in which the goods container to be transferred is located; connecting the determined number of independent arms with the body and the distal arm; driving the picking mechanism to extend into the goods shelf, and controlling a pulling finger mechanism to pull the goods container. In the above technical solution, by designing the intermediate mechanism into a modular structure, a telescopic length of the clamping fork may be adjusted according to the depth of the goods shelf in which the goods container that actually needs to be transferred is located, thus improving the adaptability of the goods container transfer robot.

In a specific implementation, connecting the determined number of independent arms to the body and the distal arm includes: slidably connecting the independent arms at two ends of the intermediate assembly to the body and the distal arm in a one-to-one correspondence, respectively; and connecting the linkage mechanisms of the independent arms at the two ends to the body and the distal arm. Thus, it is convenient to connect the clamping fork with the driving mechanism.

### BRIEF DESCRIPTION OF THE DRAWINGS

In order to more clearly explain the technical solution of embodiments of the present disclosure, accompanying drawings needed to be used in the embodiments will be briefly introduced below. The accompanying drawings here are incorporated into the specification and form a part of the specification. These accompanying drawings show embodiments in accordance with the present disclosure, and are used together with the specification to explain the technical solution of the present disclosure. It should be understood that the following accompanying drawings only show some embodiments of the present disclosure, so they should not be regarded as limiting the scope. For those skilled in the art, other relevant accompanying drawings may also be obtained according to these accompanying drawings without any creative efforts.
Fig. 1 is a schematic view of an application scenario of a goods container transfer robot according to an embodiment of the present disclosure;
Fig. 2 is a schematic view of an application scenario of a goods container transfer robot according to an embodiment of the present disclosure;
Fig. 3 is a schematic view of a goods container transfer robot according to an embodiment of the present disclosure;
Fig. 4 is a schematic view of a picking mechanism according to an embodiment of the present disclosure;
Fig. 5 is a schematic view of a clamping fork according to an embodiment of the present disclosure;
Fig. 6 is a schematic view of a driving mechanism according to an embodiment of the present disclosure;
Fig. 7 is a schematic view of a fit of a driving mechanism and an independent arm according to an embodiment of the present disclosure;
Fig. 8 is a schematic view of an independent arm according to an embodiment of the present disclosure;
Fig. 9 is a schematic view of a distal arm according to an embodiment of the present disclosure.

### DETAILED DESCRIPTION

In order to make the purpose, technical solution and advantages of the present disclosure more clear, the present disclosure is further described in detail below with reference to accompanying drawings and embodiments. It should be understood that the specific embodiments described herein are only used to explain the present disclosure, and not to limit the present disclosure.

In order to make the purpose, technical solution and advantages of the present disclosure more clear, the present disclosure will be further described in detail below with reference to accompanying drawings. Obviously, the described embodiments are only part of the embodiments of the present disclosure, and not all of them. Based on the embodiments in the present disclosure, all other embodiments obtained by those ordinary skilled in the art without doing creative work belong to the protection scope of the present disclosure.

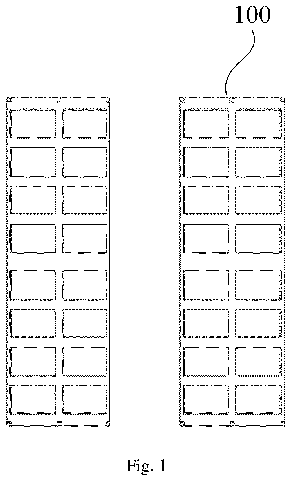

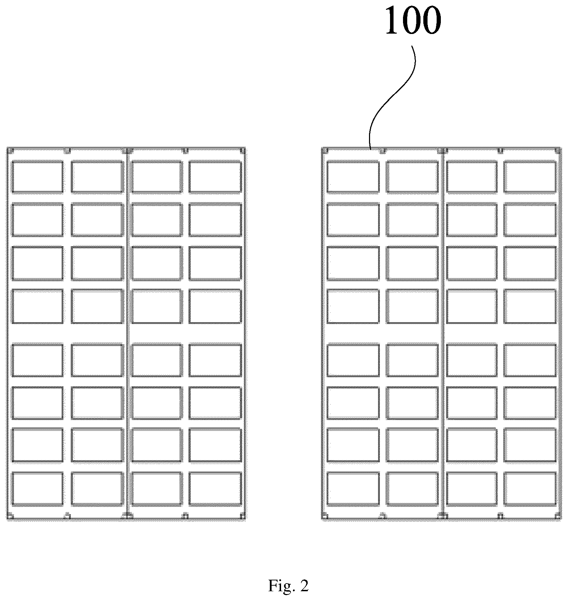

In order to facilitate the understanding of a goods container transfer robot according to embodiments of the present disclosure, the goods container transfer robot according to the embodiments of the present disclosure is described in detail below with reference to Figs. 1 and 2. As shown in Figs. 1 and 2, the goods container transfer robot according to the embodiments of the present disclosure is configured to transfer a goods container in a warehouse. In the warehouse, the goods container is stored in a goods shelf 100. However, when the goods shelf 100 is placed in the warehouse, it needs to be adaptively arranged according to the environment of the warehouse. As shown in Fig. 1, the goods shelves 100 are arranged in two rows, and a pickup channel is arranged between the two rows of goods shelves 100. However, with the increasing utilization requirement of the warehouse area, the goods shelves 100 are arranged in four rows as shown in Fig. 2 and the pickup channel is arranged between the four rows of goods shelves 100 in the related art. Or, the goods shelves 100 may also be arranged in five rows, six rows or in other different manners. In order to adapt to picking up goods in the warehouse where a plurality of rows of goods shelves 100 are arranged, the embodiments of the present disclosure provide the goods container transfer robot. Here, Fig. 1 and Fig. 2 show only examples of the warehouse. The goods container transfer robot according to the embodiments of the present disclosure may be used in various storage scenes with complex and changeable environments.

The goods container transfer robot according to the embodiments of the present disclosure is described in detail below with reference to the specific accompanying drawings.

First of all, the goods container is to be explained. The goods container in the present disclosure refers to a container configured to hold a product or a semi-finished product in the logistics industry, including but not limited to a work bin, a carton, a wooden container and other common containers.

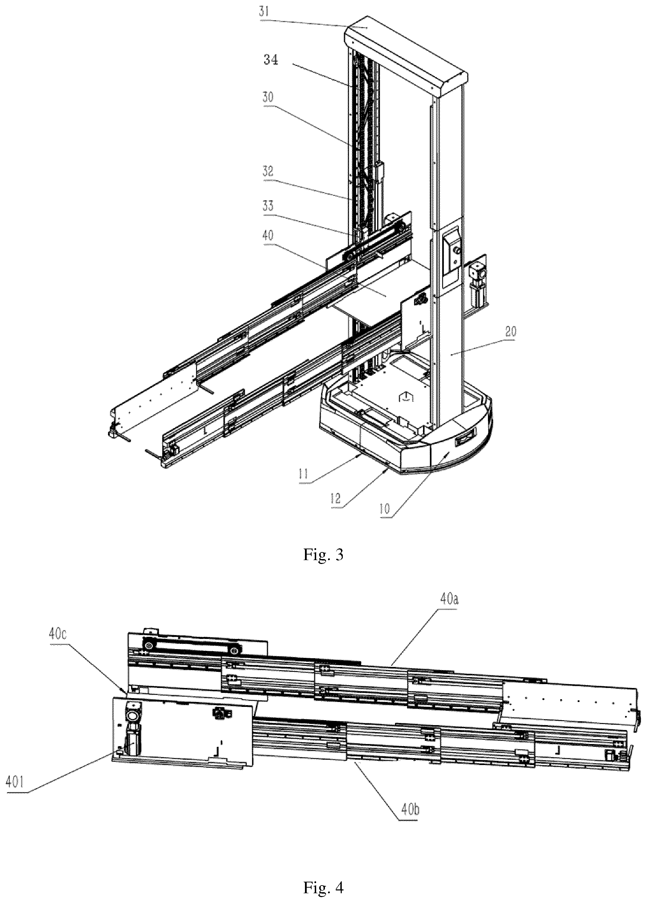

The goods container transfer robot according to the embodiments of the present disclosure is shown in Fig. 3. A main structure of the goods container transfer robot according to the embodiments of the present disclosure may include a robot carrier 10, a gantry 20 arranged on the robot carrier 10, and a picking mechanism 40 slidably mounted on the gantry 20. The robot carrier 10 is configured as a bearing mechanism, the gantry 20 is configured to support the picking mechanism 40, and the picking mechanism 40 is configured to take the goods container out of the goods shelf. Mechanisms of the above components are described in detail below with reference to the drawings.

Firstly, the robot carrier 10 according to the embodiments of the present disclosure is described. The robot carrier 10 is configured as a traveling device of the entire goods container transfer robot 1, and may adopt a common robot in the related art. For example, the robot carrier 10 may be a wheeled flat robot. For example, the robot carrier 10 includes a wheel 11, a suspension 12 and other assemblies. The robot carrier 10, as a bearing base of other assemblies, enables the robot to complete various movements on the ground, such as traveling and turning. When traveling, the robot carrier 10 may move to the goods shelf for performing a required work according to the navigation system, and complete the route conversion, the obstacle avoidance and other operations during the moving process. The above actions are common technical means of the existing robot carrier 10, which are not repeated here.

The gantry 20 is vertically mounted on and fixedly connected to the robot carrier 10. Specifically, the gantry 20 and the robot carrier 10 may be connected by a threaded member (a bolt or a screw), or different manners such as a welding connection and a snap connection may further be adopted. A height of the above gantry 20 corresponds to a height of the goods shelf in which the goods container to be transferred is located. When the goods shelf has a different height, the height of the gantry 20 may be changed, so as to ensure that the picking mechanism 40 may access the goods container at a topmost storey of the goods shelf. Or, the gantry 20 may further be configured as a height adjustable gantry, so as to adapt to goods shelves of different heights.

The picking mechanism 40 needs to slide to a same height as a storey of the goods shelf in which the goods container is located when the picking mechanism 40 picks up the goods container. The goods container transfer robot according to the embodiments of the present disclosure has a lifting mechanism 30 configured to drive the picking mechanism 40 to slide. The lifting mechanism 30 drives the picking mechanism 40 to move. The lifting mechanism 30 is mounted in the gantry 20, and the picking mechanism 40 is moved in a vertical direction through a driving element 31.

The lifting mechanism according to the embodiments of the present disclosure may adopt different structures. For example, the lifting mechanism in Fig. 3 is a mechanism in the form of a sliding block and a guide rail. A linear guide rail 32 is mounted on the gantry, a sliding block 33 is mounted on the picking mechanism 40, and the picking mechanism 40 may move vertically on the guide rail 32 through the sliding block 33. The driving element 31 is arranged at a top of the gantry, connected to the picking mechanism 40 through a chain 34, and drives the picking mechanism 40 to move by the chain 34. The sliding stability of the picking mechanism 40 is ensured through the fit of the sliding block 33 and the guide rail 32.

It should be understood that the lifting mechanism 30 according to the embodiments of the present disclosure is not limited to the structure shown in Fig. 3. In addition to the form of the sliding block and the guide rail, the lifting mechanism may further include, but not limited to, the following examples.

A gear and rack mechanism, in which a rack is mounted on the gantry 20 and a gear is mounted on the picking mechanism 40. The driving element drives the gear to drive a telescopic fork system to move vertically along the rack.

A synchronous belt mechanism, in which a synchronous belt is mounted on the gantry 20, and a synchronous pulley is mounted on the picking mechanism 40. The driving element drives the synchronous pulley to drive the picking mechanism 40 to move vertically along the synchronous belt.

A friction wheel mechanism, in which a guide rail plane is fixed on the gantry 20, and a friction wheel is mounted on the picking mechanism 40. The driving element drives the friction wheel to drive the picking mechanism 40 to move vertically along the guide rail plane.

A lead screw mechanism, in which a lead screw is mounted on the gantry 20, and a sliding block is mounted on the picking mechanism 40. The driving element drives the lead screw to rotate, so that the sliding block drives the picking mechanism 40 to move vertically.

A link mechanism, in which a structure similar to a scissors fork is mounted on the gantry 20, and the picking mechanism 40 is fixed at a proper position of the scissors fork. The driving element drives a bar to rotate to drive the picking mechanism 40 to move vertically.

The implementations of the above specific lifting mechanisms are relatively common mechanisms. Therefore, in the embodiments of the present disclosure, it will not be explained in detail how the above mechanisms are connected to the gantry and the picking mechanism.

In an optional embodiment, the above driving element 31 may include a driving motor and a gear box fitted with the driving motor. The driving element 31 is a relatively common driving component in the goods container transfer robot, and thus the specific cooperation relations of the driving element 31 with other components in the lifting mechanism will not be repeated in detail.

Referring to Fig. 4, Fig. 4 shows a schematic view of the picking mechanism according to the embodiments of the present disclosure. The picking mechanism according to the embodiments of the present disclosure is mounted on the gantry. The picking mechanism includes a body 40c and a clamping fork, the body 40c is slidably connected to the gantry and configured to bear the goods container pulled by the picking mechanism, and the clamping fork is slidably connected to the body 40c and configured to stretch out and pull the goods container. The body 40c as shown in Fig. 4 is a U-shaped structure and includes a bottom plate and two opposite side walls. The body 40c includes a driving mechanism configured to drive each clamping fork (only a driving unit 401 of the driving mechanism is shown), and the clamping fork may be driven to extend and retract through the driving mechanism. The picking mechanism includes a clamping fork 40a and a clamping fork 40b symmetrically arranged on two sides of the body 40c. The clamping fork 40a and the clamping fork 40b extend into the goods shelf and pull the goods container when extending. The clamping fork 40a and the clamping fork 40b pull the goods container into the body 40c when retracting.

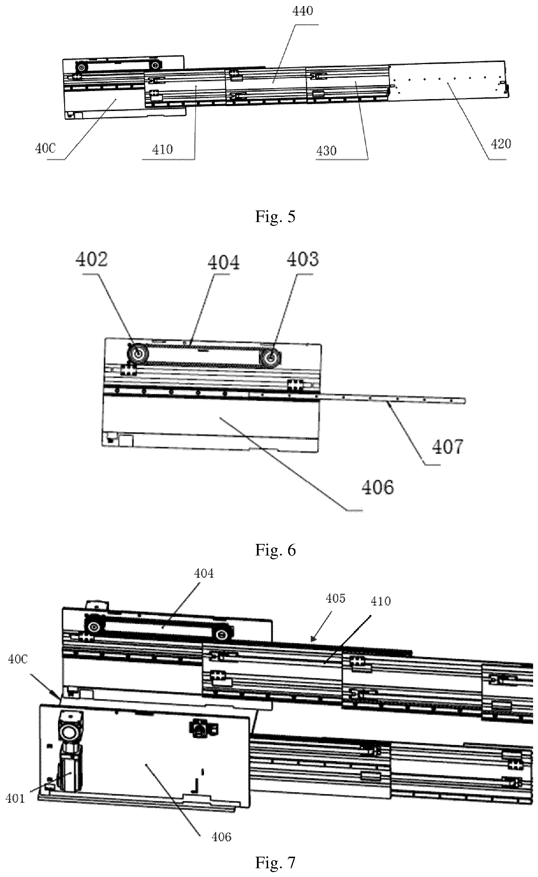

The above clamping fork 40a and clamping fork 40b are symmetrical in structure, so the illustration is made by taking one clamping fork as an example. Referring to Fig. 5, Fig. 5 shows a schematic view of a specific structure of one clamping fork. Each clamping fork includes an intermediate assembly slidably connected to the body, and a distal arm 420 slidably connected to the intermediate assembly. The intermediate assembly includes a plurality of detachable independent arms, and the plurality of independent arms are configured to slide relative to each other. Taking three independent arms shown in Fig. 5 as an example, the intermediate assembly includes three independent arms 410, 430 and 440, and each of the independent arms is an independent structure.

Referring to Figs. 4, 6 and 7, Fig. 4 shows the driving unit 401 configured to provide a driving force in the driving mechanism, and Figs. 6 and 7 show other structures of the driving mechanism. Other structures include a double-side toothed synchronous belt 404 arranged on a side wall 406 of the body and connected to the driving unit, a rack 405 engaged with the double-side toothed synchronous belt 404 and other assemblies. The double-side toothed synchronous belt 404 is driven by a pulley 402 and a pulley 403, and the pulley 402 and the pulley 403 are connected to the driving unit 401. The above driving unit 401 may be a driving motor or a mechanism including a driving motor and a gear box. As shown in Fig. 7, same reference numerals in Fig. 7 may refer to those in Fig. 6. The driving mechanism further includes the rack 405 engaged with the double-side toothed synchronous belt 404, and the rack 405 is configured to be fixedly connected to the independent arm adjacent to the body in a detachable manner, for example, to the independent arm 410 in Fig. 7. When the rack 405 is fixed on the independent arm 410, the rotation of the double-side toothed synchronous belt 404 may drive the rack 405 to slide, and then drive the independent arm 410 to slide, thus realizing the sliding of the independent arm 410 relative to the body.

In an optional solution, the side wall 406 of the body has a guide rail 407 fitted with the independent arm 410. The independent arm 410 may slide relative to the body through the fit of the guide rail 407 and the independent arm 410.

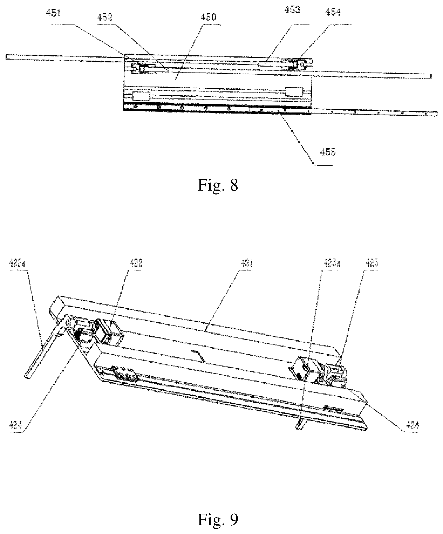

Referring to Fig. 8, Fig. 8 shows a specific structure of the independent arm. Each independent arm 450 includes a linkage mechanism linked with the driving mechanism. The independent arm 450 in the clamping fork is a modular structure, so one independent arm 450 is taken as an example to illustrate its linkage mechanism. The linkage mechanism includes a synchronous belt 452 and a synchronous belt 453 arranged on the independent arm 450, the independent arm 450 has a pulley 451 fitted with the synchronous belt 452 and a pulley 454 fitted with the synchronous belt 453, the synchronous belt 452 surrounds the pulley 451, and the synchronous belt 453 surrounds the pulley 454. One end of the synchronous belt 452 and one end of the synchronous belt 453 are located on one side of the independent arm 450, and the other end of the synchronous belt 452 and the other end of the synchronous belt 453 are located on the other side of the independent arm 450. The one end of the synchronous belt 452 and the one end of the synchronous belt 453 located on the one side of the independent arm 450 are fixedly connected to an adjacent independent arm or the body in a detachable manner, and the other end of the synchronous belt 452 and the other end of the synchronous belt 453 located on the other side of the independent arm 450 are fixedly connected to another adjacent independent arm or the distal arm in a detachable manner. Referring to Fig. 5, taking the above three independent arms 450 as an example, the connection manner of one synchronous belt is as follows: in the independent arm 410 slidably connected to the body 40c, the end of the synchronous belt on one side is fixedly connected to the body 40c, and the end of the synchronous belt on the other side is fixedly connected to the independent arm 410; the end of the synchronous belt on one side of the independent arm 440 is connected to the independent arm 410, and the end of the synchronous belt on the other side is connected to the independent arm 430; the end of the synchronous belt on one side of the independent arm 430 is connected to the independent arm 440, and the end of the synchronous belt on the other side is fixedly connected to the distal arm 420.

It can be seen from the above description that each independent arm 450 is an independent module. When a telescopic length of the clamping fork needs to be changed, the change may be achieved by increasing or decreasing the number of the independent arms 450. For example, when the goods shelf includes a plurality of rows of goods shelves, the number of the independent arms 450 may be increased, so as to increase the telescopic length of the clamping fork. When the number of the rows of the good shelves is relatively small, the number of the independent arms 450 may be decreased, so as to reduce the telescopic length of the clamping fork.

In an optional solution, the clamping fork may be a bi-directional telescopic clamping fork. In this case, the clamping fork may extend in a first direction and may also extend in a second direction, and the first direction is opposite to the second direction, which enables the goods container transfer robot to transfer the goods container on either one of two sides of the channel without turning, thus improving the transferring efficiency. Two synchronous belts 452 and 453 are provided when the clamping fork is the bi-directional clamping fork. One of the synchronous belts is configured to drive the independent arm to extend and retract in the first direction, and the other one of the synchronous belts is configured to drive the independent arm to extend and retract in the second direction, such as the synchronous belt 452 and the synchronous belt 453 in Fig. 8, in which the synchronous belt 452 is a synchronous belt configured to drive the independent arm 450 to extend and retract in the first direction, and the synchronous belt 453 is a synchronous belt configured to drive the independent arm 450 to extend and retract in the second direction. When the clamping fork is a unidirectional telescopic clamping fork, only one synchronous belt may be used. The specific arrangement of the synchronous belt may be determined according to a telescopic direction of the clamping fork. When the telescopic direction is the first direction, only the synchronous belt 452 may be used. When the telescopic direction is the second direction, only the synchronous belt 453 may be used.

In an optional solution, the independent arm 450 further has a guide rail 455, and the adjacent independent arm may be arranged on the guide rail 455. The above three independent arms are taken as an example. Referring to Fig. 5, the independent arm 410 is slidably connected to a guide rail on the body 40c, a guide rail on the independent arm 440 is slidably connected to the independent arm 410, a guide rail on the independent arm 440 is slidably connected to the independent arm 430, and a guide rail on the independent arm 430 is slidably connected to the distal arm 420.

The distal arm includes a pulling finger mechanism configured to pull the goods container. Two pulling finger mechanisms may be provided, and the two pulling finger mechanisms are arranged at two opposite ends of the distal arm, respectively. Each pulling finger mechanism may include a steering machine fixed on the distal arm and a pulling finger connected to the steering machine. The steering machine is configured to drive the pulling finger to rotate. During the pickup process, the steering machine drives the pulling finger, so that the pulling finger is perpendicular to the distal arm. As shown in Fig. 4, the pulling finger is perpendicular to the distal arm, and the pulling finger is in contact with the goods container and is configured to pull the goods container to move. After the pickup, the pulling finger may rotate to a position parallel to the distal arm, thus reducing the space occupied by the pulling finger mechanism and ensuring the reliability of the pulling finger mechanism. As shown in Fig. 9, the distal arm 420 includes a steering machine 422, a pulling finger 422a, a steering machine 423, a pulling finger 423a and other assemblies. The steering machine 422 and the steering machine 423 may drive the pulling finger 422a and the pulling finger 423a to rotate to a working position, respectively, so as to pull the goods container. Compared with the related art in which a mechanical structure is adopted to drive the pulling finger, there is no wear of the mechanical structure occurred in the related art if the steering machine is adopted to drive the pulling finger, thus improving the working reliability of the pulling finger mechanism. Of course, the pulling finger mechanism according to the embodiments of the present disclosure may further adopt other structures which may pull the goods container to be transferred.

In an optional solution, each distal arm includes a plurality of pulling finger mechanisms, and the plurality of pulling finger mechanisms extend in a length direction of the distal arm. The plurality of pulling finger mechanisms are configured to move independently, so as to limit different goods containers. For example, the above plurality of pulling finger mechanisms may move independently, and the plurality of pulling finger mechanisms may move independently, so as to limit the goods container. Taking three pulling finger mechanisms as an example, a first pulling finger mechanism, a second pulling finger mechanism and a third pulling finger mechanism are arranged along the length direction of the distal arm. The first pulling finger mechanism is located at an end of the distal arm, and the first pulling finger mechanism and the second pulling finger mechanism define a space for accommodating the goods container, so as to receive a first goods container. Or, the first goods container may be pulled by the first pulling finger mechanism alone. Or, the first goods container may be pulled by the second pulling finger mechanism alone. Working states of the first pulling finger mechanism, the second pulling finger mechanism and the third pulling finger mechanism may be independently controlled as required when operating in a specific work. The second pulling finger mechanism and the third pulling finger mechanism define a space for accommodating the goods container, so as to receive a second goods container. When the plurality of pulling finger mechanisms are provided, spaces may also be defined to receive three goods containers, four goods containers or different numbers of goods containers. The above pulling finger mechanisms each may work independently. If only the first goods container needs to be pulled, only the first pulling finger mechanism may be controlled to rotate to the working position, or the first pulling finger mechanism and the second pulling finger mechanism may be controlled simultaneously to rotate to the working position. The first goods container and the second goods container are arranged adjacent to each other on the goods shelf along a depth direction of the goods shelf, and the first goods container is located on an inner side. When the first goods container and the second goods container need to be transferred simultaneously, the first pulling finger mechanism and the second pulling finger mechanism may be controlled simultaneously to rotate to the working position, or the first pulling finger mechanism, the second pulling finger mechanism and the third pulling finger mechanism may be controlled simultaneously to rotate to the working position.

In an optional solution, the distal arm further has a sensor 424 configured to detect the goods container. The goods container transfer robot further includes a control device, and the control device is configured to control the pulling fingers of the pulling finger mechanisms located on two sides of the goods container to rotate to the working position when the sensor 424 detects the goods container to be transferred. The above control device may be a PLC, a one-chip computer, an industrial computer or other common control devices. It should be understood that it is a common technical means in the related art that the control device controls the action of a component according to the received data. Therefore, in the present disclosure, the specific electrical connection relationship between the control device and the detection device, the specific electrical connection relationship between the control device and the adjustment device, and the specific control logic are not illustrated in detail.

In order to facilitate understanding how the clamping fork according to the embodiments of the present disclosure works, the following description will be made in combination with the structures of the components disclosed above.

The driving unit 401 drives the pulley 402 and the pulley 403 to rotate clockwise, and then the double-side toothed synchronous belt 404 drives the rack 405 and the independent arm 410 to move in the first direction together. The synchronous belt driving the independent arm 410 to extend in the first direction moves in the first direction synchronously and drives the independent arm 440 to move in the first direction (the principle of the pulley here is similar to that of a movable pulley, and a movement distance of the independent arm 440 is twice a movement distance of the independent arm 410). Similarly, the synchronous belt driving the independent arm 440 to extend in the first direction moves in the first direction synchronously and drives the independent arm 430 to move in the first direction. Then, the synchronous belt driving the independent arm 430 to extend in the first direction moves in the first direction synchronously and drives the distal arm 420 to move in the first direction. When it is determined through the sensor 424 that the distal arm 420 reaches a designated position, the steering machine 423 drives the pulling finger 423a to rotate, so as to pull the goods container. Then, the driving unit 401 of the driving element drives the pulley 402 and the pulley 403 to rotate counterclockwise, so that the pulling finger 423a drives the goods container to return to its original position. In the above description, the pulling of the goods container on a right side of the robot is completed through the telescopic fork.

The embodiments of the present disclosure further provide a method for transferring a goods container, the method uses the goods container transfer robot described in any one of the above embodiments, and the method includes following steps.

At step 001, a number of independent arms is determined according to a depth of a goods shelf in which the goods container to be transferred is located.

At step 002, the determined number of independent arms are connected with the body and the distal arm.

Specifically, the independent arms at two ends of the intermediate assembly are slidably connected to the body and the distal arm in a one-to-one correspondence, respectively. The linkage mechanisms of the independent arms at the two ends are connected to the body and the distal arm, thus facilitating the connection of the clamping fork and the driving mechanism.

At step 003, the picking mechanism is driven to extend into the goods shelf and the pulling finger mechanism is controlled to pull the goods container.

When the goods container to be transferred is blocked by another goods container at an outer side, the goods container transfer robot controls the picking mechanism to move the blocking goods container away, and further takes out the goods container to be transferred through the picking mechanism.

As can be seen from the above description, by designing the intermediate mechanism into a modular structure, the telescopic length of the clamping fork may be adjusted according to the depth of the goods shelf in which the goods container that actually needs to be transferred is located, thus improving the adaptability of the goods container transfer robot.

The above descriptions are only optional embodiments of the present disclosure, and are not intended to limit the present disclosure. Any modification, equivalent replacement and improvement made within the spirit and principle of the present disclosure shall be included in the scope of protection of the present disclosure.

## Claims

1. A goods container transfer robot, comprising a robot carrier and a gantry arranged on the robot carrier, and further comprising a picking mechanism,
wherein the picking mechanism comprises a body slidably connected to the gantry and a pair of clamping forks slidably connected to the body, and each clamping fork comprises an intermediate assembly slidably connected to the body and a distal arm slidably connected to the intermediate assembly and configured to pull a goods container;
wherein the intermediate assembly comprises a plurality of detachable independent arms, and the plurality of independent arms are configured to slide relative to each other;
the body comprises a driving mechanism configured to drive each clamping fork; and
each independent arm comprises a linkage mechanism linked with the driving mechanism.

2. The goods container transfer robot according to claim 1, wherein the gantry is vertically mounted on and fixedly connected to the robot carrier.

3. The goods container transfer robot according to claim 1 or 2, wherein a height of the gantry corresponds to a height of a goods shelf in which the goods container to be transferred is located; or, a height of the gantry is adjustable.

4. The goods container transfer robot according to any one of claims 1 to 3, further comprising a lifting mechanism,
wherein the lifting mechanism is mounted in the gantry, and the lifting mechanism drives the picking mechanism to move in a vertical direction through a driving element.

5. The goods container transfer robot according to claim 4, wherein the lifting mechanism comprises at least one of a sliding block and guide rail mechanism, a gear and rack mechanism, a synchronous belt mechanism, a lead screw mechanism, a friction wheel mechanism and a link mechanism.

6. The goods container transfer robot according to any one of claims 1 to 5, wherein the clamping fork is a bi-directional clamping fork.

7. The goods container transfer robot according to any one of claims 1 to 6, wherein the linkage mechanism of each independent arm comprises:
a synchronous belt arranged on the independent arm, wherein an end of the synchronous belt located on one side of the independent arm is fixedly connected to an adjacent independent arm or the body in a detachable manner;
an end of the synchronous belt located on the other side of the independent arm is fixedly connected to another adjacent independent arm or the distal arm in a detachable manner.

8. The goods container transfer robot according to claim 7, wherein a side wall of the body has a guide rail fitted with the independent arm.

9. The goods container transfer robot according to claim 7 or 8, wherein two synchronous belts are provided when the clamping fork is a bi-directional clamping fork;
one of the synchronous belts is configured to drive the independent arm to extend and retract in a first direction;
the other one of the synchronous belts is configured to drive the independent arm to extend and retract in a second direction, and the first direction is opposite to the second direction.

10. The goods container transfer robot according to any one of claims 1 to 9, wherein the distal arm comprises a pulling finger mechanism configured to pull the goods container.

11. The goods container transfer robot according to claim 10, wherein each pulling finger mechanism comprises a steering machine fixed on the distal arm and a pulling finger connected to the steering machine, and the steering machine is configured to drive the pulling finger to rotate.

12. The goods container transfer robot according to claim 10 or 11, wherein each distal arm comprises a plurality of pulling finger mechanisms, and the plurality of pulling finger mechanisms extend in a length direction of the distal arm;
the plurality of pulling finger mechanisms are configured to move independently, so as to limit different goods containers.

13. The goods container transfer robot according to claim 11 or 12, further comprising:
a sensor arranged on the distal arm and configured to detect the goods container; and
a control device configured to control the pulling fingers of the pulling finger mechanisms located on two sides of the goods container to rotate to a working position when the sensor detects the goods container to be transferred.

14. The goods container transfer robot according to any one of claims 1 to 13, wherein the driving mechanism comprises a driving unit configured to provide a driving force, a double-side toothed synchronous belt connected to the driving unit and a rack engaged with the double-side toothed synchronous belt, and the rack is fixedly connected to the independent arm adjacent to the body in a detachable manner.

15. A method for transferring a goods container, using a goods container transfer robot according to any one of claims 1 to 15, and comprising:
determining a number of independent arms according to a depth of a goods shelf in which the goods container to be transferred is located;
connecting the determined number of independent arms with the body and the distal arm;
driving the picking mechanism to extend into the goods shelf, and controlling a pulling finger mechanism to pull the goods container.

16. The method according to claim 15, wherein connecting the determined number of independent arms with the body and the distal arm comprises:
slidably connecting the independent arms at two ends of the intermediate assembly to the body and the distal arm in a one-to-one correspondence, respectively, and connecting the linkage mechanisms of the independent arms at the two ends to the body and the distal arm.

17. The method according to claim 15 or 16, wherein when the goods container to be transferred is blocked by another goods container at an outer side, the goods container transfer robot controls the picking mechanism to move the blocking goods container away, and further takes out the goods container to be transferred through the picking mechanism.
